# FASCICULE DE BREVET EUROPEEN

(11) **EP 2 064 114 B1**
(45) Date de publication et mention de la délivrance du brevet: **27.12.2017**
(21) Numéro de dépôt: 07823827.6
(22) Date de dépôt: 14.09.2007
(51) Int. Cl.: E05B 77/12

(54) **SYSTEME DE VERROUILLAGE ET DE DEVERROUILLAGE D'UNE PORTE DE COCKPIT D'UN AERONEF ET PORTE COMPORTANT UN TEL SYSTEME**
VERRIEGELUNGS- UND ENTRIEGELUNGSSYSTEM FÜR DIE COCKPITTÜR EINES FLUGZEUGS UND TÜR MIT SOLCH EINEM SYSTEM
LOCKING AND UNLOCKING SYSTEM FOR THE COCKPIT DOOR OF AN AIRCRAFT AND DOOR WITH SUCH A SYSTEM

(30) Priorité: 22.09.2006 FR 0653917
(43) Date de publication de la demande: 03.06.2009
(73) Titulaire: AIRBUS OPERATIONS (S.A.S), 31060 Toulouse (FR)
(72) Inventeur: PUJOL, Olivier, 31700 Beauzelle (FR); ROQUES, Serge, 31700 Cornebarrieu (FR)
(74) Mandataire: Gicquel, Olivier Yves Gérard
(86) Numéro de dépôt international: PCT/FR2007/051932
(87) Numéro de publication internationale: WO 2008/034992

(56) Documents cités:
- EP-A- 1 347 421
- FR-A1- 2 848 179
- GB-A- 573 513
- GB-A- 2 419 158
- US-A- 4 915 326

## Description

### Domaine de l'invention

L'invention concerne un système de verrouillage et de déverrouillage d'une porte de séparation entre un cockpit et une cabine d'un aéronef. Ce système a pour but d'assurer un déverrouillage automatique de cette porte de séparation en cas de crash de l'aéronef.

L'invention trouve des applications dans le domaine de l'aéronautique et, en particulier, dans le domaine de la sécurité des membres d'équipage d'un aéronef et notamment des pilotes.

### Etat de la technique

Dans le domaine de l'aéronautique, en particulier pour les aéronefs transportant des passagers, il est prévu qu'une porte sépare le poste de pilotage, ou cockpit, de la cabine dans laquelle sont installés les passagers. Cette porte de séparation est sécurisée de façon à protéger les pilotes de toute attaque par un ou plusieurs passagers, notamment une attaque terroriste.

Pour cela, la porte de séparation est renforcée. Elle est également verrouillée. Le verrouillage peut se faire automatiquement dès que l'aéronef quitte le parking ou dès que les portes d'accès à la cabine passager sont fermées. De plus, pour rendre la porte plus résistante à l'épreuve des balles, l'encadrement de la porte est renforcé, ce qui permet d'éviter que des balles ne puissent être tirées, par un passager, à travers l'interstice entre la porte et son encadrement.

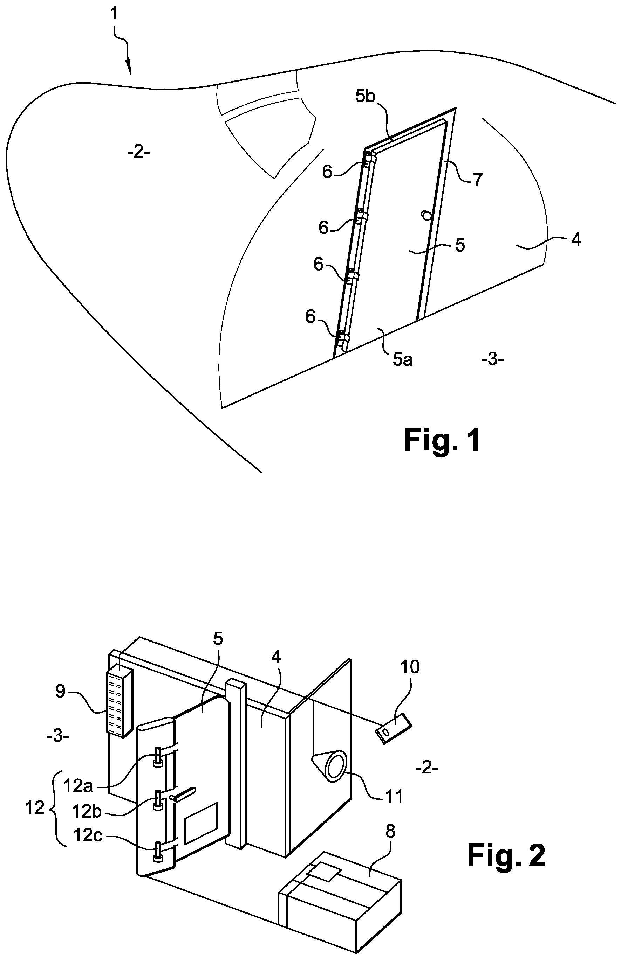

Sur la figure 1, on a représenté une vue générale de l'avant d'un aéronef 1 équipé d'une porte classique 5 de séparation entre la cabine passagers 3 et le cockpit 2 de l'aéronef. Le cockpit 2 est destiné à accueillir une partie au moins du personnel navigant de l'aéronef, notamment les pilotes. La cabine 3 est destinée à accueillir les passagers de l'aéronef et, éventuellement, une partie du personnel navigant.

La porte de séparation 5 est agencée au niveau d'une cloison 4 séparant le cockpit 2 et la cabine 3. Elle comporte une face 5a coté cockpit et une face 5b coté cabine. La porte 5 est placée perpendiculairement à la surface du plancher de l'aéronef. La porte 5 est montée sur un cadre de porte 7 par l'intermédiaire de charnières 6, alignées suivant un axe perpendiculaire à la surface du plancher. Les charnières 6 sont généralement situées du côté cockpit 5b de la porte de façon à ne pas être accessibles par les passagers depuis la cabine. Le cadre de porte 7 peut comporter une surface de butée qui recouvre partiellement le côté cabine 5a de la porte, lorsque celle-ci est dans une position fermée, c'est-à-dire lorsqu'elle obture le passage entre le cockpit et la cabine. Le cadre de porte 7 est réalisé de façon à ce qu'il n'y ait pas d'interstice entre la porte 5 et ledit cadre 7 afin qu'une personne armée située dans la cabine 3 de l'aéronef ne puisse tirer des balles à travers ces interstices.

Dans la configuration de la porte qui vient d'être décrite, la porte 5 et du cadre de porte 7 autorisent uniquement une ouverture de la porte vers le cockpit 2. Il est bien entendu que la prote 5 peut aussi être montée sur son cadre 7 d'une manière inverse ou différente, pour certaines applications.

Un exemple d'une telle porte sécurisée est décrit dans la demande de brevet FR-A-2 848 179 et dans la demande de brevet EP 1 347 421. Une telle porte de cockpit est conçue pour être compatible avec les mesures de sécurité actuelles visant à renforcer la sécurité du personnel navigant installé dans le cockpit. Cette porte est également adaptée pour faire face à une dépressurisation pouvant survenir à l'intérieur de l'aéronef et, plus précisément, à l'intérieur de la cabine de l'aéronef.

Pour répondre à la réglementation de sécurité actuelle, cette porte de séparation est verrouillée dès que l'avion quitte le parking et pour toute la durée du vol. Un exemple de système de verrouillage classique est représenté sur la figure 2. Ce système de verrouillage comporte un ensemble de gâches électriques 12, ou verrous, installé dans le flanc de la porte, c'est-à-dire dans la tranche de la porte ou à proximité de la tranche de la porte. En position de verrouillage, ces verrous sont insérés dans des crampons montés dans le cadre de porte 7 ou dans des orifices du cadre 7 adaptés pour recevoir lesdits verrous. Cet ensemble de verrous est commandé électriquement. Plus précisément, ces verrous électriques sont alimentés en permanence pour assurer le verrouillage de la porte. Lorsque l'alimentation électrique est coupée, les verrous coulissent vers une position de déverrouillage. La porte est alors déverrouillée.

Ce système de verrouillage a donc pour effet de verrouiller la porte 5 électriquement. Le personnel navigant installé dans le cockpit 2, appelé par la suite équipage du cockpit, peut ouvrir la porte, c'est-à-dire déverrouiller la porte au moyen d'une commande manuelle de déverrouillage 8, par exemple un levier de commande. Cette commande manuelle 8, appelée par la suite levier, est connectée à une unité de contrôle 10 de la porte qui assure la commande électrique du verrouillage et du déverrouillage de la porte 5. Si le personnel navigant installé dans la cabine 3 de l'aéronef, appelé par la suite équipage de cabine, a besoin d'entrer dans le cockpit, par exemple pour amener un plateau repas à l'équipage du cockpit, alors cet équipage de cabine a la possibilité de composer un code sur un clavier alphanumérique 9 installé dans la cabine 3, à proximité de la porte 5. Ce code a pour effet de commander l'émission d'une sonnerie par un dispositif sonore 11, ou buzzer en termes anglo-saxons, installé dans le cockpit 2. Cette sonnerie signifie à l'équipage du cockpit qu'un membre de l'équipage de cabine demande l'accès au cockpit. L'équipage du cockpit peut alors décider de l'ouverture de la porte 5 ; pour cela, il actionne le levier 8 qui, par l'intermédiaire de l'unité de contrôle 10, coupe l'alimentation du système de verrouillage, assurant le déverrouillage de la porte. En dehors de cette sonnerie, l'équipage de cockpit peut choisir d'actionner ou non le levier de commande de déverrouillage de la porte.

En cas d'incapacité de l'équipage du cockpit à réagir pour déverrouiller la porte, par exemple dans le cas où cet équipage a perdu connaissance, il est important que l'équipage de cabine soit en mesure de porter secours à l'équipage du cockpit. Pour cela, le clavier alphanumérique 9 situé à proximité de la porte 5 permet à l'équipage de cabine, au moyen d'une procédure spécifique, de déverrouiller directement la porte de séparation, après un certain intervalle de temps, par exemple de 30 secondes, permettant ainsi à l'équipage de cabine de porter secours à l'équipage du cockpit. Cette procédure spécifique est telle qu'elle ne peut être réalisée par les passagers en cabine et, notamment, par des terroristes.

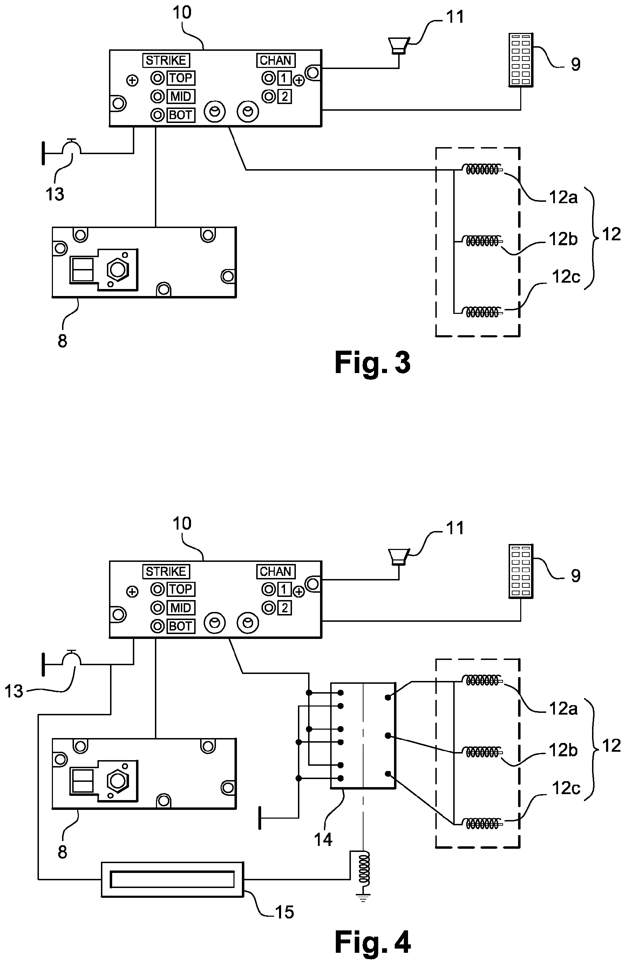

Sur la figure 3, on a représenté un schéma électrique du système de verrouillage de la figure 2. Ce schéma électrique représente les différentes connexions entre les différents éléments du système. L'unité de contrôle 10 est connectée au dispositif de sonnerie 11 ainsi qu'au clavier alphanumérique 9. Elle est également connectée à l'ensemble de verrous 12 et au levier de déverrouillage 8. L'unité de contrôle 10 est, de plus, reliée à un disjoncteur 13 qui assure la sécurité électrique du système. On comprend alors que l'unité de contrôle 10 gère, d'une part, la transmission du signal sonore vers le dispositif de sonnerie 11. Elle gère, d'autre part, la commande de déverrouillage de l'ensemble de verrous 12 en fonction des signaux reçus des commandes manuelles, à savoir le levier 8 et le clavier 9, en transmettant de l'énergie électrique à l'ensemble de verrous ou en coupant cette alimentation électrique. Cette coupure de l'alimentation électrique est donc commandée uniquement par l'unité de contrôle 10 à partir d'un ordre reçu du levier de commande 8 ou bien du clavier alphanumérique 9.

Cependant, en cas de crash de l'aéronef, il est possible que certaines déformations de la porte ou du cadre de porte empêchent l'équipage de cabine de déverrouiller la porte à partir du clavier. Dans ce cas, il faut attendre l'intervention des forces spécialisées de secours au sol pour démolir la porte, au moyen d'instruments tranchants du type hache, pour pénétrer dans le cockpit et porter secours à l'équipage de cockpit, ce qui peut prendre un temps relativement long. Or, il a été montré qu'un avion peut prendre feu relativement rapidement (de l'ordre de quelques minutes) après un crash. Le temps nécessaire aux forces spécialisées pour intervenir est, dans ce cas, trop long pour permettre de sortir l'équipage du cockpit à temps

### Exposé de l'invention

L'invention a justement pour but de remédier aux inconvénients des techniques décrites précédemment. A cette fin, l'invention propose un moyen permettant de déverrouiller la porte de séparation, en cas de crash de l'aéronef. Ainsi, si la porte étant déverrouillée au moment du crash, l'équipage de cabine peut intervenir auprès de l'équipage du cockpit. En outre, les forces de secours peuvent être plus rapidement auprès de l'équipage du cockpit. Pour cela, l'invention propose un système de verrouillage et de déverrouillage d'une porte de séparation d'un aéronef comportant un moyen de commande automatique du déverrouillage lorsqu'un crash est détecté.

De façon plus précise, l'invention concerne un système de verrouillage et de déverrouillage d'une porte de séparation séparant un cockpit d'une cabine d'un aéronef, comportant :
- un ensemble de verrous commandé électriquement et assurant le verrouillage de la porte,
- une unité de contrôle assurant une commande électrique dudit ensemble de verrous,
- une première commande manuelle de déverrouillage de la porte connectée à l'unité de contrôle et installée dans le cockpit,
- une seconde commande manuelle de déverrouillage de la porte connectée à l'unité de contrôle et installée dans une cabine,
caractérisé en ce qu'il comporte un moyen de commande automatique du déverrouillage de la porte lorsqu'un crash de l'aéronef est détecté.

L'invention peut comporter également une ou plusieurs des caractéristiques suivantes :
- le moyen de commande du déverrouillage comporte un accéléromètre relié à un relais de commutation, ledit relais étant connecté à l'unité de contrôle et à l'ensemble de verrous.
- l'accéléromètre est installé à un emplacement de l'aéronef inaccessible depuis la cabine.
- le relais de commutation est connecté individuellement à chaque verrou de l'ensemble de verrous.
- la première commande manuelle est un levier.
- la seconde commande manuelle est un clavier alphanumérique.

L'invention concerne également une porte de séparation d'un cockpit et d'une cabine d'un aéronef, caractérisé par le fait qu'elle comporte un système de verrouillage et de déverrouillage tel que décrit précédemment.

Cette porte peut comporter un moyen de freinage assurant un contrôle de l'ouverture de ladite porte lorsque celle-ci est déverrouillée.

L'invention concerne également un aéronef comportant un cockpit et une cabine passagers, séparés par une porte de sécurité munie du système de verrouillage et de déverrouillage tel que décrit précédemment.

### Brève description des dessins

La figure 1, déjà décrite, représente un exemple de porte de sécurité séparant un cockpit d'une cabine, dans un aéronef.
La figure 2, déjà décrite, représente un exemple de système de verrouillage et de déverrouillage selon l'art antérieur.
La figure 3, déjà décrite, représente un schéma électrique du système de verrouillage et de déverrouillage de la figure 2.
La figure 4 représente un schéma électrique du système de verrouillage et de déverrouillage d'une porte d'aéronef selon l'invention.

### Description détaillée de modes de réalisation de l'invention

Le système de verrouillage et de déverrouillage d'une porte de séparation conforme à l'invention correspond à un système de verrouillage et de déverrouillage tel que décrit précédemment, mais comportant en plus des moyens pour assurer un déverrouillage automatique en cas de crash de l'aéronef. Le système de l'invention permet l'ouverture automatique de la porte du cockpit en cas de crash, tout en gardant l'intégrité et la fonctionnalité de la porte de séparation lors des phases de vol. La réglementation en vigueur est donc respectée, mais une mesure de sécurité y est apportée en cas de crash.

Sur la figure 4, on a représenté un exemple de schéma électrique d'un système de verrouillage et de déverrouillage selon l'invention. Ce système comporte une unité de contrôle 10 connectée, en entrée à un levier de commande 8 et à un clavier alphanumérique 9. Elle est connectée également en entrée à un accéléromètre 15.

L'accéléromètre 15 et l'unité de contrôle 10 sont reliés à un disjoncteur 13 qui assure la sécurité électrique du système.

L'unité de contrôle 10 est connectée, en sortie, à un dispositif de sonnerie 11 et à un ensemble de verrous 12, par l'intermédiaire d'un relais de commutation. L'unité de contrôle 10 gère les signaux à sa sortie en fonction des signaux reçus à ses entrées.

Le relais de commutation 14 ainsi que l'accéléromètre 15 constituent des moyens pour déverrouiller de façon automatique la porte de séparation lorsqu'un crash de l'aéronef est détecté. L'accéléromètre 15 mesure l'accélération de l'aéronef. En effet, lorsqu'un aéronef est en phase de crash, son accélération augmente de façon relative. Ainsi, dès que l'accéléromètre 15 détecte une accélération supérieure à un certain seuil, par exemple un seuil de 1G, alors l'accéléromètre envoie un signal à l'unité de contrôle 10. Celle-ci, à réception du signal de l'accéléromètre 15, envoie un signal au relais de commutation 14. Ce relais de commutation 14 est connecté individuellement à chacun des verrous de l'ensemble de verrous 12. Par exemple, si l'ensemble de verrous 12 comporte trois verrous, à savoir un verrou haut 12a, un verrou intermédiaire 12b et un verrou bas 12c, alors le relais de commutation 14 est relié par trois de ses sorties aux trois verrous 12a, 12b, 12c de l'ensemble 12.

Ainsi, en fonctionnement normal, le relais de commutation 14 transmet le courant électrique vers l'ensemble de verrous 12. Il coupe momentanément l'alimentation électrique de l'ensemble 12 à réception d'un signal de commande de déverrouillage de l'unité de contrôle 10.

En fonctionnement de sécurité, lorsque l'accéléromètre 15 détecte une accélération anormale, supérieure au seuil prédéterminé, il actionne le relais de commutation 14, via l'unité de contrôle 10. Le relais de commutation 14 coupe définitivement l'alimentation électrique des différents verrous de l'ensemble de verrous 12, par une mise à la masse. Les verrous n'étant plus alimentés électriquement, ils se relâchent et la porte est déverrouillée. La porte du cockpit est alors libre de s'ouvrir. En outre, au moment du crash, les forces résultantes de l'accélération appliquées à la porte déverrouillée assurent l'ouverture automatique et immédiate de la porte. Il est alors possible à l'équipage de cabine ou aux forces de secours d'intervenir sans délais pour sauver l'équipage du cockpit.

Les accélérations spécifiques d'un aéronef en cas de crash sont bien connues en aéronautique. En effet, il ne peut y avoir une accélération constante lors du vol. Si une accélération constante est détectée, avec une valeur supérieure à un seuil prédéfini, cela signifie que l'aéronef est en train descendre dangereusement. On est alors en condition de crash. La détection d'une telle accélération ne peut être erronée. Il n'y a donc pas de déverrouillage intempestif possible de la porte par le système de l'invention.

Par ailleurs, une accélération de l'aéronef ne peut être créée artificiellement, par un passager, pour permettre un déverrouillage automatique de la porte. Par conséquent, la seule accélération susceptible de déclencher le relais de commutation est l'accélération due à un crash.

Dans un mode de réalisation préféré de l'invention, et dans le but d'augmenter encore la sécurité du système, l'accéléromètre est installé dans un endroit de l'aéronef qui n'est pas accessible depuis la cabine.

Dans une variante de l'invention, la porte de séparation est équipée d'un frein, par exemple un frein hydropneumatique, qui offre l'avantage de ralentir l'ouverture de la porte puis de bloquer la porte en position ouverte, facilitant le passage des forces spécialisées. Toutefois, si le choc relatif au crash entraîne la fermeture de la porte, celle-ci est fermée mais non verrouillée puisque les verrous ne sont plus alimentés électriquement. Les forces de secours peuvent donc intervenir en ouvrant simplement la porte comme dans le cas des portes anciennes, non sécurisées.

## Revendications

1. Système de verrouillage et de déverrouillage d'une porte de séparation (5) séparant un cockpit (2) d'une cabine (3) d'un aéronef (1), comportant :
- un ensemble de verrous (12) commandé électriquement et assurant le verrouillage de la porte,
- une unité de contrôle (10) assurant une commande électrique dudit ensemble de verrous,
- une première commande manuelle (8) de déverrouillage de la porte connectée à l'unité de contrôle (10) et installée dans le cockpit,
- une seconde commande manuelle (9) de déverrouillage de la porte
connectée à l'unité de contrôle (10) et installée dans une cabine, **caractérisé en ce qu'**il comporte un accéléromètre (15) apte à détecter un crash et un relais de commutation (14) apte à commander un déverrouillage automatique de la porte lorsque l'accéléromètre (15) détecte un accélération supérieure à 1G, ledit relais étant connecté, d'une part, à l'accéléromètre et, d'autre part, à l'unité de contrôle (10) et à l'ensemble de verrous (12).

2. Système selon la revendication 1, **caractérisé en ce que** l'accéléromètre (15) est installé à un emplacement de l'aéronef inaccessible depuis la cabine.

3. Système selon l'une quelconque des revendications 1 à 2, **caractérisé en ce que** le relais de commutation (14) est connecté individuellement à chaque verrou de l'ensemble de verrous (12).

4. Système selon l'une quelconque des revendications 1 à 3, **caractérisé en ce que** la première commande manuelle est un levier.

5. Système selon l'une quelconque des revendications 1 à 4, **caractérisé en ce que** la seconde commande manuelle est un clavier alphanumérique.

6. Porte de séparation d'un cockpit (2) et d'une cabine (3) d'un aéronef (1), **caractérisé en ce qu'**elle comporte un système de verrouillage et de déverrouillage selon l'une quelconque des revendications précédentes.

7. Porte de séparation selon la revendication 6, **caractérisé en ce qu'**elle comporte un moyen de freinage assurant un contrôle de l'ouverture de ladite porte lorsque celle-ci est déverrouillée.

8. Aéronef comportant une porte de séparation (5) entre un cockpit (2) et une cabine (3), **caractérisé en ce que** la porte comporte un système de verrouillage et de déverrouillage selon l'une quelconque des revendications 1 à 5.

## Patentansprüche

1. System zum Verriegeln und Entriegeln einer ein Cockpit (2) von einer Kabine (3) eines Luftfahrzeugs (1) trennenden Trenntür (5), das aufweist:
- eine Einheit von Riegeln (12), die elektrisch gesteuert wird und das Verriegeln der Tür gewährleistet,
- ein Steuergerät (10), das eine elektrische Steuerung der Einheit von Riegeln gewährleistet,
- eine erste Handsteuerung (8) zum Entriegeln der Tür, die mit dem Steuergerät (10) verbunden und im Cockpit installiert ist,
- eine zweite Handsteuerung (9) zum Entriegeln der Tür, die mit dem Steuergerät (10) verbunden und in einer Kabine installiert ist,
**dadurch gekennzeichnet, dass** es einen Beschleunigungsmesser (15), der einen Crash erfassen kann, und ein Umschaltrelais (14) aufweist, das eine automatische Entriegelung der Tür steuern kann, wenn der Beschleunigungsmesser (15) eine Beschleunigung von mehr als 1G erfasst, wobei das Relais einerseits mit dem Beschleunigungsmesser und andererseits mit dem Steuergerät (10) und mit der Einheit von Riegeln (12) verbunden ist.

2. System nach Anspruch 1, **dadurch gekennzeichnet, dass** der Beschleunigungsmesser (15) an einer Stelle des Luftfahrzeugs installiert ist, die von der Kabine aus unzugänglich ist.

3. System nach einem der Ansprüche 1 bis 2, **dadurch gekennzeichnet, dass** das Umschaltrelais (14) einzeln mit jedem Riegel der Einheit von Riegeln (12) verbunden ist.

4. System nach einem der Ansprüche 1 bis 3, **dadurch gekennzeichnet, dass** die erste Handsteuerung ein Hebel ist.

5. System nach einem der Ansprüche 1 bis 4, **dadurch gekennzeichnet, dass** die zweite Handsteuerung eine alphanumerische Tastatur ist.

6. Trenntür eines Cockpits (2) und einer Kabine (3) eines Luftfahrzeugs (1), **dadurch gekennzeichnet, dass** sie ein System zum Verriegeln und Entriegeln nach einem der vorhergehenden Ansprüche aufweist.

7. Trenntür nach Anspruch 6, **dadurch gekennzeichnet, dass** sie eine Bremseinrichtung aufweist, die eine Kontrolle der Öffnung der Tür gewährleistet, wenn diese entriegelt wird.

8. Luftfahrzeug, das eine Trenntür (5) zwischen einem Cockpit (2) und einer Kabine (3) aufweist, **dadurch gekennzeichnet, dass** die Tür ein System zum Verriegeln und Entriegeln nach einem der Ansprüche 1 bis 5 aufweist.

## Claims

1. System for locking and unlocking a separating door (5) separating a cockpit (2) from a cabin (3) of an aircraft (1), comprising:
- a set of locks (12) electrically controlled and ensuring the locking of the door,
- a control unit (10) ensuring electrical control of said set of locks,
- a first manual control (8) for unlocking the door connected to the control unit (10) and installed in the cockpit,
- a second manual control (9) for unlocking the door connected to the control unit (10) and installed in a cabin,
**characterized in that** it comprises an accelerometer (15) capable of detecting a crash and a switching relay (14) capable of commanding an automatic unlocking of the door when the accelerometer (15) detects an acceleration greater than 1 G, said relay being connected, on one side, to the accelerometer and, on the other, to the control unit (10) and to the set of locks (12).

2. System according to Claim 1, **characterized in that** the accelerometer (15) is installed at a location of the aircraft inaccessible from the cabin.

3. System according to either one of Claims 1 and 2, **characterized in that** the switching relay (14) is connected individually to each lock of the set of locks (12).

4. System according to any one of Claims 1 to 3, **characterized in that** the first manual control is a lever.

5. System according to any one of Claims 1 to 4, **characterized in that** the second manual control is an alphanumeric keypad.

6. Separating door of a cockpit (2) and of a cabin (3) of an aircraft (1), **characterized in that** it comprises a locking and unlocking system according to any one of the preceding claims.

7. Separating door according to Claim 6, **characterized in that** it comprises a braking means ensuring control of the opening of said door when the latter is unlocked.

8. Aircraft comprising a separating door (5) between a cockpit (2) and a cabin (3), **characterized in that** the door comprises a locking and unlocking system according to any one of Claims 1 to 5.
